# DEMANDE DE BREVET EUROPEEN

(11) **EP 4 383 379 A1**
(43) Date de publication de la demande: **12.06.2024**
(21) Numéro de dépôt: 23214002.0
(22) Date de dépôt: 04.12.2023
(51) Int. Cl.: H01M 8/04089, B60L 58/30, H01M 8/04119, H01M 8/04746, H01M 8/04828

(54) **PROCEDE ET SYSTEME D'HUMIDIFICATION D'UNE ALIMENTATION EN AIR D'UNE PILE A COMBUSTIBLE POUR AERONEF**

(30) Priorité: 06.12.2022 FR 2212849
(71) Demandeur: Airbus Operations (S.A.S.), 31060 Toulouse Cedex 9 (FR); Airbus Operations GmbH, 21129 Hamburg (DE)
(72) Inventeur: HORDE, Theophile, 31060 TOULOUSE (FR); ROUX, Paul-Emile, 31060 TOULOUSE (FR); ROUX, Anthony, 31060 TOULOUSE (FR); LE BAIL, Julien, 31060 TOULOUSE (FR); DURAN, Ignacio, 31060 TOULOUSE (FR); KLEWER, Guido, 21129 HAMBURG (DE); STRUMMEL, Hendrik, 21129 HAMBURG (DE)
(74) Mandataire: Cabinet Le Guen Maillet

(57) **Abrégé**

Procédé d'humidification d'une alimentation en air d'une pile à combustible, un circuit d'alimentation en air comportant une canalisation d'injection, une canalisation intermédiaire, et une canalisation d'évacuation. Le procédé comporte des étapes de récupérer de l'air recyclé, dans la canalisation d'évacuation ; et injecter l'air recyclé dans la canalisation d'injection de sorte à le mélanger à de l'air ambiant issu de l'environnement. Le procédé comporte en outre d'augmenter le taux d'air recyclé dans la canalisation d'injection lorsqu'une consigne de puissance de la pile diminue et si ladite consigne de puissance est inférieure à un seuil de puissance prédéfini, et de diminuer le taux d'air recyclé lorsque la consigne de puissance augmente et si ladite consigne de puissance reste inférieure au seuil de puissance prédéfini. La pile à combustible peut ainsi fonctionner dans un régime de faible puissance sans dépasser une limite de tension maximale autorisée.

## Description

### DOMAINE TECHNIQUE

La présente invention concerne le domaine de l'alimentation en air des piles à combustible et plus particulièrement un système destiné à humidifier l'alimentation en air d'une pile à combustible dans un aéronef, en particulier d'une pile à combustible alimentant électriquement un moteur électrique de propulsion de l'aéronef.

### ETAT DE LA TECHNIQUE ANTERIEURE

Le fonctionnement d'une pile à combustible nécessite une alimentation en air au niveau de la cathode. L'air d'une telle alimentation est généralement humidifié en entrée de la pile à combustible afin d'améliorer les performances de la pile à combustible.

Par ailleurs, afin d'éviter d'accélérer les dégradations de la pile à combustible et ainsi empêcher une réduction de la durée de vie de la pile à combustible, il est préférable d'éviter que la tension fournie aux bornes d'une pile à combustible dépasse une limite maximale en tension, qui est généralement de l'ordre de 850 mV. En raison de caractéristiques inhérentes à la pile à combustible, cette limite maximale en tension entraîne l'impossibilité de faire fonctionner la pile à combustible en-dessous d'une limite minimale de puissance. En effet, la tension aux bornes de la pile à combustible diminue lorsque le courant augmente. En outre, lorsque le courant fourni par la pile à combustible est inférieur à une valeur seuil de courant, la puissance (produit de la tension par le courant) fournie par la pile augmente lorsque le courant fourni par la pile augmente. La limite minimale de puissance de la pile à combustible dépend donc de paramètres de dimensionnement de la pile à combustible et correspond à la puissance minimale atteignable par la pile à combustible lorsque la tension fournie par la pile atteint la limite maximale en tension.

Une telle limite minimale de puissance est problématique pour obtenir un fonctionnement à faible puissance de la pile à combustible, par exemple lors d'une utilisation dans un régime à faible puissance telle qu'une phase de ralenti d'un moteur de l'aéronef alimenté par la pile à combustible, tout en maintenant une durée de vie acceptable.

Une première solution envisageable pour obtenir un fonctionnement en régime de faible puissance est de diminuer volontairement la performance de la pile à combustible en agissant sur des paramètres extérieurs, tels que la pression ou la concentration des gaz envoyés dans la pile à combustible, ou encore la température de la pile à combustible. Le rendement de la pile à combustible est ainsi réduit et il est alors possible d'obtenir un fonctionnement à faible puissance de la pile à combustible sans dépasser la limite maximale en tension. Toutefois, cette solution ne permet pas d'obtenir une performance optimale dans un régime nominal de fonctionnement, dans lequel les puissances requises de la pile à combustible sont plus élevées. Le rendement de la pile à combustible s'en trouve diminué.

Il est alors souhaitable de pallier ces inconvénients de l'état de la technique.

Il est notamment souhaitable de fournir une solution qui permette d'obtenir un fonctionnement à faible puissance de la pile à combustible tout en conservant une tension fournie aux bornes de la pile à combustible inférieure à la limite maximale en tension, de sorte à éviter la dégradation de la pile à combustible et la réduction de sa durée de vie. Il est en outre souhaitable de fournir une solution qui permette de conserver un rendement optimal de la pile à combustible dans des phases de fonctionnement standard (vol de croisière...) à des puissances nominales. Il est enfin souhaitable de fournir une solution facile à implémenter, peu coûteuse, et compacte.

### EXPOSE DE L'INVENTION

Un objet de la présente invention est de proposer un procédé de gestion d'une humidification d'une alimentation en air d'une pile à combustible pour aéronef, un circuit d'alimentation en air de la pile à combustible comportant une canalisation d'injection, une canalisation intermédiaire passant par une cathode de la pile à combustible, et une canalisation d'évacuation, l'air circulant dans un sens prédéfini dans le circuit d'alimentation en passant successivement dans la canalisation d'injection, la canalisation intermédiaire et la canalisation d'évacuation. Le procédé comporte des étapes de : récupérer de l'air, dit air recyclé, issu de la pile à combustible, dans la canalisation d'évacuation ; injecter, dans la canalisation d'injection, l'air recyclé récupéré, de sorte à mélanger l'air recyclé à de l'air ambiant. Le procédé comporte en outre d'augmenter le taux d'air recyclé par rapport à l'air ambiant dans la canalisation d'injection :
- lorsqu'une consigne de puissance ou de courant de la pile à combustible diminue et si en outre ladite consigne de puissance ou de courant est inférieure à un seuil prédéfini, ou
- lorsqu'une tension fournie par la pile à combustible atteint ou s'élève au-dessus d'une limite maximale de tension autorisée.

Le procédé comporte en outre de diminuer le taux d'air recyclé par rapport à l'air ambiant dans la canalisation d'injection :
- lorsque la consigne de puissance ou de courant augmente et si en outre ladite consigne de puissance ou de courant, reste inférieure au seuil prédéfini, ou
- lorsque la tension fournie par la pile à combustible descend en-dessous de la limite maximale de tension autorisée.

Il est ainsi possible d'augmenter temporairement la concentration en eau et diminuer la concentration en dioxygène de l'air injecté dans la canalisation intermédiaire afin de dégrader volontairement la performance de la pile à combustible. Un fonctionnement à faible puissance peut ainsi être obtenu aisément sans dépasser une limite maximale de tension autorisée de la pile à combustible. En outre, il est possible d'inverser la dégradation volontaire des performances de la pile à combustible par diminution de la concentration en eau et augmentation de la concentration en dioxygène de l'air injecté dans la canalisation intermédiaire, et augmenter ainsi le rendement lorsque la pile à combustible fonctionne à des puissances nominales. Par ailleurs, la dégradation volontaire des performances de la pile à combustible peut être adaptée à diverses gammes de puissance, permettant ainsi d'obtenir le meilleur rendement possible en conservant une tension fournie par la pile à combustible inférieure à la limite maximale de tension autorisée.

Selon un mode de réalisation particulier, injecter l'air recyclé dans la canalisation d'injection est effectué en entrée d'un compresseur situé sur la canalisation d'injection.

Selon un mode de réalisation particulier, injecter l'air recyclé dans la canalisation d'injection est effectué entre les deux étages d'un compresseur à deux étages, ledit compresseur étant situé sur la canalisation d'injection.

Selon un mode de réalisation particulier, la canalisation d'injection comporte un humidificateur configuré pour permettre un échange d'eau entre l'air circulant dans la canalisation d'évacuation et l'air circulant dans la canalisation d'injection, et l'étape d'injecter, dans la canalisation d'injection, l'air recyclé récupéré de sorte à mélanger l'air recyclé à de l'air ambiant, est effectuée uniquement lorsque la consigne de puissance ou de courant est inférieure à un seuil prédéfini, ou lorsqu'une tension fournie par la pile à combustible atteint ou s'élève au-dessus de la limite maximale de tension autorisée.

Selon un mode de réalisation particulier, la canalisation d'injection comporte un humidificateur configuré pour permettre un échange d'eau entre l'air circulant dans la canalisation d'injection et l'air circulant dans la canalisation d'évacuation. L'étape de récupérer de l'air recyclé dans la canalisation d'évacuation est effectuée en aval de l'humidificateur sur la canalisation d'évacuation, et l'étape d'injecter, dans la canalisation d'injection, l'air recyclé récupéré de sorte à mélanger l'air recyclé à de l'air ambiant, est effectuée uniquement lorsque la consigne de puissance ou de courant est inférieure à un seuil prédéfini, ou lorsqu'une tension fournie par la pile à combustible atteint ou s'élève au-dessus de la limite maximale de tension autorisée.

L'invention concerne également un circuit d'alimentation en air d'une pile à combustible pour aéronef, le circuit d'alimentation en air étant destiné à humidifier l'air alimentant la pile à combustible. Le circuit d'alimentation en air comporte : une canalisation d'injection ; une canalisation intermédiaire passant par une cathode de la pile à combustible ; et une canalisation d'évacuation. L'air circule dans un sens prédéfini dans le circuit d'alimentation en passant successivement dans la canalisation d'injection, la canalisation intermédiaire et la canalisation d'évacuation. Le circuit d'alimentation en air comporte en outre une canalisation, dite canalisation de recirculation comportant : une première extrémité reliée à la canalisation d'évacuation de sorte à récupérer de l'air, dit air recyclé, issu de la pile à combustible ; et une deuxième extrémité reliée à la canalisation d'injection, de sorte à injecter, dans la canalisation d'injection, l'air recyclé récupéré et mélanger l'air recyclé à de l'air ambiant. Le circuit d'alimentation en air est configuré pour augmenter le taux d'air recyclé par rapport à l'air ambiant dans la canalisation d'injection :
- lorsqu'une consigne de puissance ou de courant de la pile à combustible diminue et si ladite consigne de puissance ou de courant est inférieure à un seuil prédéfini, ou
- lorsqu'une tension fournie par la pile à combustible atteint ou s'élève au-dessus d'une limite maximale de tension autorisée.

Le circuit d'alimentation est en outre configuré pour diminuer le taux d'air recyclé par rapport à l'air ambiant dans la canalisation d'injection :
- lorsque la consigne de puissance ou de courant augmente et si ladite consigne de puissance ou de courant reste inférieure au seuil prédéfini, ou
- lorsque la tension fournie par la pile à combustible descend en-dessous de la limite maximale de tension autorisée.

Selon un mode de réalisation particulier, le circuit d'alimentation en air comporte en outre : un premier contrôleur de flux situé sur la canalisation de recirculation pour contrôler le débit de l'air recyclé ; et un deuxième contrôleur de flux, situé sur la canalisation d'injection avant la deuxième extrémité de la canalisation de recirculation par rapport au sens prédéfini de circulation de l'air, pour contrôler le débit de l'air ambiant.

Selon un mode de réalisation particulier, la canalisation d'injection comporte un compresseur d'air ambiant, la deuxième extrémité de la canalisation de recirculation étant reliée à la canalisation d'injection avant l'entrée du compresseur d'air ambiant.

Selon un mode de réalisation particulier, la canalisation d'injection comporte un compresseur d'air ambiant à deux étages, la deuxième extrémité de la canalisation de recirculation étant reliée à la canalisation d'injection entre les deux étages du compresseur d'air ambiant à deux étages.

Selon un mode de réalisation particulier, la canalisation d'injection comporte un humidificateur configuré pour permettre un échange d'eau entre l'air circulant dans la canalisation d'évacuation et l'air circulant dans la canalisation d'injection, et la canalisation de recirculation comporte une vanne, la vanne étant ouverte uniquement lorsque la consigne de puissance ou de courant est inférieure à un seuil prédéfini, ou lorsque la tension fournie par la pile à combustible atteint ou s'élève au-dessus de la limite maximale de tension autorisée.

Selon un mode de réalisation particulier, la canalisation d'injection comporte un humidificateur configuré pour permettre un échange d'eau entre l'air circulant dans la canalisation d'injection et l'air circulant dans la canalisation d'évacuation, la première extrémité de la canalisation de recirculation est située en aval de l'humidificateur et la canalisation de recirculation comporte une vanne, la vanne étant ouverte uniquement lorsque la consigne de puissance ou de courant est inférieure à un seuil prédéfini, ou lorsque la tension fournie par la pile à combustible atteint ou s'élève au-dessus de la limite maximale de tension autorisée.

L'invention concerne également un aéronef comportant un circuit d'alimentation en air tel que mentionné ci-dessus dans l'un quelconque de ses modes de réalisation.

Il est également proposé un produit programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme d'ordinateur est exécuté par le processeur. L'invention concerne également un support de stockage d'informations stockant un tel programme d'ordinateur comprenant des instructions pour implémenter le procédé mentionné ci-dessus dans l'un quelconque de ses modes de réalisation lorsque ledit programme d'ordinateur est lu depuis ledit support de stockage et exécuté par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un aéronef comportant un circuit d'alimentation en air d'une pile à combustible ;
[Fig. 2] illustre schématiquement le circuit d'alimentation en air selon un premier mode de réalisation ;
[Fig. 3] illustre schématiquement le circuit d'alimentation en air selon un deuxième mode de réalisation ;
[Fig. 4] illustre schématiquement le circuit d'alimentation en air selon un troisième mode de réalisation ;
[Fig. 5] illustre schématiquement une architecture matérielle d'une unité de contrôle du circuit d'alimentation en air ;
[Fig. 6] illustre schématiquement un procédé de gestion de l'humidification d'une alimentation en air d'une pile à combustible, selon un mode de réalisation ; et
[Fig. 7] illustre schématiquement un procédé de gestion de l'humidification d'une alimentation en air d'une pile à combustible, selon un autre mode de réalisation ;
[Fig. 8] illustre schématiquement le circuit d'alimentation en air selon un quatrième mode de réalisation ;
[Fig. 9] illustre schématiquement le circuit 2 d'alimentation en air selon un cinquième mode de réalisation.

### EXPOSE DETAILLE DE MODES DE REALISATION

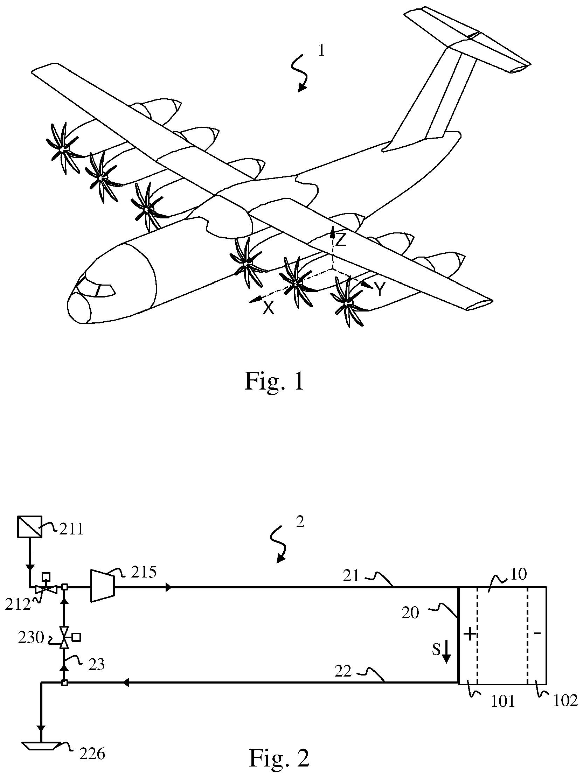

La **Fig. 1** illustre ainsi schématiquement un aéronef 1 comportant au moins une pile à combustible 10, et un circuit 2 d'alimentation en air de la pile à combustible 10. L'aéronef 1 comporte au moins un moteur électrique destiné à entraîner en rotation une hélice pour la propulsion de l'aéronef 1, chaque moteur électrique étant alimenté en électricité par au moins une dite pile à combustible 10. Un moteur électrique alimenté en électricité par au moins une pile à combustible 10 peut en outre, ou alternativement, être utilisé pour alimenter en courant des équipements embarqués de l'aéronef 1.

La **Fig. 2** illustre schématiquement le circuit 2 d'alimentation en air selon un premier mode de réalisation. Sur la Fig. 2, le circuit 2 d'alimentation en air est destiné à alimenter en air une pile à combustible 10, laquelle comporte une cathode 101 et une anode 102. Pour que la pile à combustible 10 fonctionne et produise de l'électricité, l'anode 102 doit être alimentée en dihydrogène et la cathode 101 en dioxygène.

Le circuit 2 d'alimentation en air comporte une canalisation intermédiaire 20, une canalisation d'injection 21 et une canalisation d'évacuation 22.

L'air circule dans un sens prédéfini S dans la canalisation intermédiaire 20, et circule ainsi successivement par la canalisation d'injection 21, la canalisation intermédiaire 20, puis la canalisation d'évacuation 22.

La canalisation intermédiaire 20 passe par la cathode 101 de la pile à combustible 10 de sorte à laisser passer une partie du dioxygène de l'air circulant dans la canalisation intermédiaire 20 vers la cathode 101. L'air circulant dans la canalisation intermédiaire 20 permet ainsi de fournir du dioxygène gazeux à la cathode 101 afin d'assurer une réaction chimique nécessaire à la production d'électricité de la pile à combustible 10. L'air circulant dans la canalisation intermédiaire 20 se raréfie donc en dioxygène au fur et à mesure de son parcours dans la canalisation intermédiaire 20 et se charge en molécules d'eau issues de la réaction chimique.

La canalisation d'injection 21 est destinée à amener de l'air ambiant, issu de l'environnement, jusqu'à la canalisation intermédiaire 20. La canalisation d'injection 21 comporte, en entrée, un filtre 211 destiné à filtrer des particules et/ou des éléments chimiques de l'air issu de l'environnement permettant ainsi de purifier l'air ambiant circulant dans la canalisation d'injection 21.

La canalisation d'évacuation 22 permet d'évacuer l'air issu de la pile à combustible 10, dit air d'échappement, depuis la canalisation intermédiaire 20 vers l'extérieur de l'aéronef 1. L'air d'échappement est évacué par le biais d'une tuyère d'échappement 226 disposée en sortie de la canalisation d'évacuation 22, autrement dit disposée à une extrémité de la canalisation d'évacuation 22 opposée à la canalisation intermédiaire 20.

Le circuit 2 d'alimentation en air comporte en outre une canalisation de recirculation 23. La canalisation de recirculation 23 est reliée en une première extrémité à la canalisation d'évacuation 22 et en une deuxième extrémité à la canalisation d'injection 21. La canalisation de recirculation 23 permet ainsi de récupérer, dans la canalisation d'évacuation 22, une partie de l'air d'échappement issu de la pile à combustible 10 pour l'injecter dans la canalisation d'injection 21. L'air d'échappement ainsi réinjecté dans la canalisation d'injection 21, est dit air recyclé, et est mélangé à l'air ambiant. Cela permet d'humidifier et de réduire la concentration en dioxygène de l'air envoyé dans la canalisation intermédiaire 20.

La canalisation d'injection 21 comporte un compresseur 215 permettant d'augmenter la pression de l'air ambiant et d'activer la circulation de l'air dans le circuit d'alimentation en air. Le compresseur 215 est situé après la deuxième extrémité de la canalisation de recirculation 23. Il n'est alors pas nécessaire d'utiliser un compresseur dédié pour la pressurisation de l'air recyclé avant de l'injecter dans la canalisation d'injection. Le circuit d'alimentation est donc simplifié.

La canalisation de recirculation 23 comporte un premier contrôleur de flux 230, tel qu'une électrovanne, permettant d'ajuster le débit d'air recyclé injecté dans la canalisation d'injection 21.

La canalisation d'injection 21 comporte un deuxième contrôleur de flux 212, tel qu'une électrovanne, permettant d'ajuster le débit d'air ambiant circulant dans la canalisation d'injection 21. Le deuxième contrôleur de flux 212 est positionné avant, autrement dit en amont de la jonction avec la canalisation de recirculation 23 par rapport au sens de circulation de l'air. Dit autrement, le deuxième contrôleur de flux 212 est situé entre l'entrée d'air ambiant de la canalisation d'injection 21 et la deuxième extrémité de la canalisation de recirculation 23, de sorte à contrôler seulement le débit de l'air ambiant issu de l'environnement.

Le circuit 2 d'alimentation en air comporte en outre une unité de contrôle 500 (non représentée en Fig. 2). L'unité de contrôle 500 est capable d'envoyer des instructions au premier contrôleur de flux 230 et au deuxième contrôleur de flux 212 afin de faire varier la proportion d'air recyclé par rapport à l'air ambiant, ou dit autrement le taux d'air recyclé, dans la canalisation d'injection 21.

L'air recyclé est plus concentré en eau et moins concentré en dioxygène que l'air ambiant. L'unité de contrôle 500 peut envoyer des instructions aux premier et deuxième contrôleurs de flux 230, 212, de sorte à augmenter le taux d'air recyclé, permettant ainsi d'augmenter la concentration en eau et diminuer la concentration en dioxygène de l'air injecté dans la canalisation intermédiaire 20. La performance de la pile à combustible est alors dégradée, ce qui permet d'obtenir un fonctionnement à faible puissance sans qu'une limite maximale de tension autorisée de la pile à combustible 10 soit dépassée. Le fonctionnement de la pile à combustible 10 dans une phase de ralenti est ainsi possible tout en évitant l'accélération de la dégradation de la pile à combustible 10.

Inversement, l'unité de contrôle 500 peut diminuer la concentration en eau et augmenter la concentration en dioxygène de l'air injecté dans la canalisation intermédiaire 20 en envoyant des instructions aux premier et deuxième contrôleurs de flux 230, 212, de sorte à diminuer le taux d'air recyclé. La performance de la pile à combustible 10 est ainsi améliorée lorsque la puissance requise de la pile à combustible 10 augmente, et permet d'obtenir un rendement élevé dans une phase de fonctionnement standard (vol de croisière...), autrement dit pour un fonctionnement à des puissances nominales.

Le taux d'air recyclé peut être diminué jusqu'à atteindre une valeur prédéfinie, calculée pour obtenir un rendement optimal de la pile à combustible 10 dans une phase de fonctionnement standard dans laquelle les puissances fournies par la pile à combustible 10 sont plus élevées que celles requises lors d'une phase de ralenti.

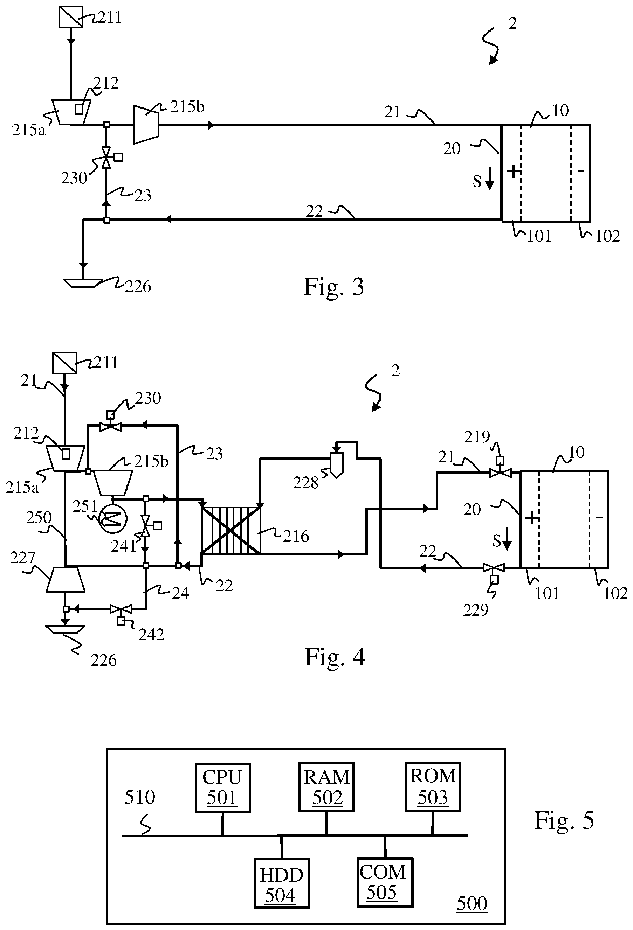

La **Fig. 3** illustre schématiquement le circuit 2 d'alimentation en air selon un deuxième mode de réalisation.

Selon le deuxième mode de réalisation, la canalisation d'injection 21 comporte un compresseur à deux étages 215a, 215b, qui se substitue au compresseur 215 du premier mode de réalisation. La deuxième extrémité de la canalisation de recirculation 23 rejoint la canalisation d'injection 21 entre un premier étage 215a et un deuxième étage 215b du compresseur.

Le premier étage 215a du compresseur permet de pressuriser et réchauffer l'air ambiant avant que l'air recyclé ne se mélange à l'air ambiant. L'air ambiant est récupéré dans l'environnement extérieur à basse température et à basse pression, avec une pression de l'ordre de 0,3 à 0,5 bars. L'air recyclé est quant à lui issu de la pile à combustible 10 avec une pression beaucoup plus élevée que la pression de l'air de l'environnement, typiquement de l'ordre de 2 à 2,5 bars, et avec une température plus élevée que l'air de l'environnement. Le premier étage 215a du compresseur permet donc de diminuer le gradient de pression entre l'air ambiant et l'air recyclé, d'une part, et de diminuer la différence de température entre l'air ambiant et l'air recyclé, d'autre part. Cela permet ainsi de faciliter le mélange entre l'air recyclé et l'air ambiant, et d'éviter une condensation d'eau qui pourrait avoir lieu par contact de l'air recyclé, chaud et très concentré en eau, avec l'air ambiant, plus froid.

Selon le deuxième mode de réalisation, le deuxième contrôleur de flux 212 est intégré au premier étage 215a du compresseur.

La **Fig. 4** illustre schématiquement le circuit 2 d'alimentation en air selon un troisième mode de réalisation.

Selon le troisième mode de réalisation, la canalisation d'injection 21 comporte, outre le filtre 211, le compresseur à deux étages 215a et 215b et le deuxième contrôleur de flux 212 intégré au premier étage 215a du compresseur, une vanne 219 située juste avant la canalisation intermédiaire 20 dans le sens S de circulation de l'air. La canalisation d'évacuation 22 comporte une vanne 229 située juste après la canalisation intermédiaire 20 dans le sens S de circulation de l'air. Les vannes 219 et 229 permettent d'isoler la pile à combustible 10 du circuit 2 d'alimentation en air lorsque la pile à combustible 10 est arrêtée. La canalisation d'évacuation 22 comporte en outre un collecteur d'eau 228, situé après la vanne 229 dans le sens S de circulation de l'air, et permettant de récupérer de l'eau sous forme liquide présente dans l'air d'échappement. En effet, l'air d'échappement comporte une importante concentration en eau pouvant aller jusqu'à saturation de l'eau sous forme gazeuse. Le collecteur d'eau 228 sépare ainsi les phases liquide et gazeuse présentes dans l'air d'échappement.

La canalisation d'injection 21 et la canalisation d'évacuation 22 passent chacune à travers un échangeur de chaleur 216, également appelé refroidisseur. L'échangeur de chaleur 216 est situé, sur la canalisation d'injection 21 après le deuxième étage 215b du compresseur et avant la vanne 219, dans le sens de circulation S de l'air. L'échangeur de chaleur 216 est situé sur la canalisation d'évacuation 22 après le collecteur d'eau 228 et avant la première extrémité de la canalisation de recirculation 23, dans le sens de circulation S de l'air.

La canalisation d'évacuation 22 comporte en outre, entre la première extrémité de la canalisation de recirculation 23 et la tuyère d'échappement 226, une turbine 227. La turbine 227 effectue une détente de l'air d'échappement et permet ainsi, en réduisant la pression de l'air d'échappement, de récupérer de l'énergie qui peut être réutilisée. L'énergie fournie par la turbine 227 peut par exemple être utilisée pour faire fonctionner le premier étage du compresseur 215a au moyen d'une liaison 250. En parallèle, le deuxième étage 215b du compresseur est par exemple alimenté par un moteur 251.

Le circuit 2 d'alimentation en air comporte une canalisation de dérivation 24. Une première portion de la canalisation de dérivation 24 relie la canalisation d'injection 21, dans une zone située entre le deuxième étage 215b du compresseur et l'échangeur de chaleur 216, à la canalisation d'évacuation 22, dans une zone située entre l'échangeur de chaleur 216 et la turbine 227.

La première portion de la canalisation de dérivation 24 comporte une vanne 241. Lorsque la vanne 241 est ouverte, de l'air ambiant est dérivé depuis la canalisation d'injection 21 vers la canalisation d'évacuation 22 et ne peut donc pas circuler dans la canalisation intermédiaire 20.

Une deuxième portion de la canalisation de dérivation 24 relie la canalisation d'évacuation 22, dans une zone située entre l'échangeur de chaleur 216 et la turbine 227, à la canalisation d'évacuation 22, dans une zone située entre la turbine 227 et la tuyère d'échappement 226. La deuxième portion de la canalisation de dérivation 24 comporte une vanne 242. Lorsque la vanne 242 est ouverte, de l'air d'échappement est dérivé par la canalisation de dérivation 24 et ne circule donc pas à travers la turbine 227.

Lorsque la pile à combustible 10 est en fonctionnement, les vannes 241 et 242 sont fermées.

Selon un quatrième mode de réalisation, l'échangeur de chaleur 216, le collecteur d'eau 228, les vannes 219 et 229, la turbine 227, ainsi que la canalisation de dérivation 24 avec les vannes 241 et 242, peuvent chacun être implémentés sur un circuit 2 d'alimentation en air comportant un unique compresseur 215 tel que décrit selon le premier mode de réalisation à la Fig. 2.

La **Fig. 5** illustre schématiquement une architecture matérielle de l'unité de contrôle 500 du circuit 2 d'alimentation en air.

L'unité de contrôle 500 comporte alors, reliés par un bus de communication 510 : un processeur ou CPU (« Central Processing Unit » en anglais) 501 ; une mémoire vive RAM (« Random Access Memory » en anglais) 502 ; une mémoire morte ROM (« Read Only Memory » en anglais) 503 ; une unité de stockage ou un lecteur de support de stockage, tel qu'un disque dur HDD (« Hard Disk Drive » en anglais) 504 ; et une interface de communication COM 505 permettant de communiquer avec le premier contrôleur de flux 212, le deuxième contrôleur de flux 230, ainsi qu'un détecteur de tension et/ou un dispositif émetteur d'une consigne de puissance ou de courant de la pile à combustible 10.

Le processeur 501 est capable d'exécuter des instructions chargées dans la RAM 502 à partir de la ROM 503, d'une mémoire externe (non représentée), d'un support de stockage, ou d'un réseau de communication. Lorsque l'unité de contrôle 500 est mise sous tension, le processeur 501 est capable de lire de la RAM 502 des instructions et de les exécuter. Ces instructions forment un programme d'ordinateur causant l'implémentation, par le processeur 501, de tout ou partie des algorithmes et étapes décrits ici en relation avec l'unité de contrôle 500.

Ainsi, tout ou partie des algorithmes et étapes décrits en relation avec l'unité de contrôle 500 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Spécifie Integrated Circuit » en anglais). D'une manière générale, l'unité de contrôle 500 comporte de la circuiterie électronique adaptée et configurée pour implémenter les algorithmes et étapes décrits en relation avec ladite unité de contrôle 500.

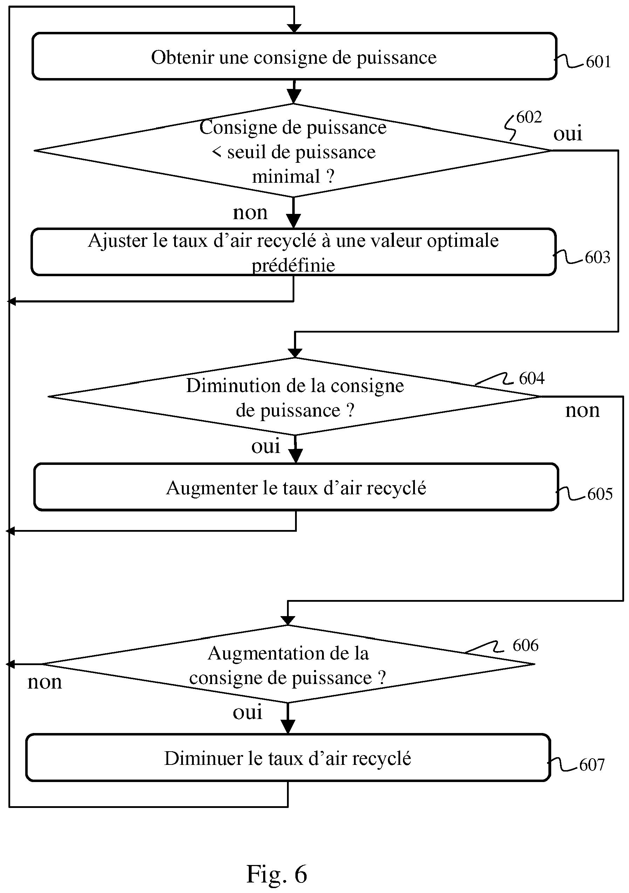

La **Fig. 6** illustre schématiquement un procédé de gestion de l'humidification d'une alimentation en air d'une pile à combustible 10, dans un mode de réalisation particulier.

Dans une première étape 601, l'unité de contrôle 500 obtient une consigne de puissance de la pile à combustible 10 en provenance d'un dispositif émetteur d'une consigne de puissance de la pile à combustible 10. La consigne de puissance provient par exemple de l'avionique de l'aéronef 1, ou d'un contrôleur de moteur électrique que la pile à combustible 10 alimente électriquement.

Dans une étape 602 suivante, l'unité de contrôle 500 compare la consigne de puissance obtenue à un seuil prédéfini de puissance. Le seuil prédéfini de puissance est défini comme étant la puissance minimale atteignable de la pile à combustible 10 lorsque la tension fournie par la pile à combustible 10 est inférieure à la limite maximale de tension autorisée, et dans des conditions permettant d'obtenir un rendement maximal à des puissances nominales de fonctionnement, autrement dit pour un taux d'air recyclé égal à la valeur prédéfinie. Le seuil prédéfini de puissance est par exemple déterminé préalablement par mesure de la puissance fournie par la pile à combustible 10 lorsque la limite maximale de tension autorisée est atteinte, pour des conditions opératoires de pression, température et concentration de gaz définies. Alternativement, le seuil prédéfini de puissance est déterminé pendant le fonctionnement de la pile à combustible 10 lorsque la tension fournie par la pile à combustible 10 atteint la limite maximale de tension autorisée. Si la consigne de puissance est supérieure au seuil prédéfini de puissance, alors l'unité de contrôle 500 effectue une étape 603. Sinon, l'unité de contrôle 500 effectue une étape 604.

Ainsi, lorsque la consigne en puissance, autrement dit la puissance requise de la pile à combustible 10, descend en dessous dudit seuil prédéfini de puissance, l'unité de contrôle 500 détecte que la pile à combustible 10 passe dans une phase de ralenti. A l'inverse, si la consigne en puissance reste ou repasse au-dessus du seuil prédéfini de puissance, l'unité de contrôle 500 détecte que la pile à combustible 10 est dans une phase de fonctionnement standard.

A l'étape 603, l'unité de contrôle 500 ajuste le taux d'air recyclé, autrement dit la proportion d'air recyclé par rapport à l'air ambiant, dans la canalisation d'injection 21, à une valeur prédéfinie adaptée à la phase de fonctionnement standard, autrement dit à un fonctionnement à des puissances nominales. Pour cela, l'unité de contrôle 500 envoie une instruction au premier contrôleur de flux 230 comportant une valeur de débit d'air recyclé, et une instruction au deuxième contrôleur de flux 212 comportant une valeur de débit d'air ambiant, de sorte que le débit d'air recyclé injecté dans la canalisation d'injection 21 par rapport au débit d'air ambiant circulant dans la canalisation d'injection 21 soit égal à la valeur prédéfinie.

L'unité de contrôle 500 récupère une valeur de débit d'air total à injecter dans la canalisation intermédiaire 20. La valeur de débit d'air total est par exemple une valeur de débit prédéterminée, configurée et enregistrée dans l'unité de contrôle 500. Selon un autre exemple, la valeur de débit d'air total est calculée régulièrement pendant le fonctionnement de la pile à combustible 10 en tenant compte du courant délivré par la pile à combustible 10, puis transmise à l'unité de contrôle 500. L'unité de contrôle 500 calcule le débit d'air recyclé d'une part et le débit d'air ambiant d'autre part, en fonction du taux d'air recyclé et de sorte que la somme du débit d'air recyclé et du débit d'air ambiant est égale au débit d'air total.

L'unité de contrôle 500 enregistre en mémoire la valeur de consigne obtenue précédemment à l'étape 601, puis retourne à l'étape 601 pour obtenir une nouvelle consigne de puissance.

Ainsi, lorsque la pile à combustible 10 est dans une phase de fonctionnement standard, l'air injecté dans la pile à combustible 10 comporte un taux d'humidité permettant d'obtenir un rendement optimal de la pile à combustible 10 pour une plage utile de puissance tout en minimisant la consommation de dihydrogène.

A l'étape 604, l'unité de contrôle 500 détermine si la consigne de puissance obtenue diminue par rapport à une valeur de consigne précédente obtenue. La valeur de consigne précédente est par exemple enregistrée en mémoire de l'unité de contrôle 500. Si la consigne de puissance obtenue est inférieure à la valeur de consigne précédente, l'unité de contrôle 500 effectue une étape 605. Sinon, l'unité de contrôle 500 effectue une étape 606.

A l'étape 605, l'unité de contrôle 500 augmente le taux d'air recyclé dans la canalisation d'injection 21. Pour cela, l'unité de contrôle 500 envoie une instruction au premier contrôleur de flux 230, comportant une valeur de débit d'air recyclé, et une instruction au deuxième contrôleur de flux 212, comportant une valeur de débit d'air ambiant, de sorte que le débit d'air recyclé injecté dans la canalisation d'injection 21 augmente par rapport au débit d'air ambiant circulant dans la canalisation d'injection 21. Le taux d'air recyclé peut être calculé en fonction de la valeur de la consigne de puissance ou en fonction de la diminution de la consigne de puissance et en tenant compte de paramètres caractéristiques de la pile à combustible 10 et du circuit 2 d'alimentation en air. Un tel calcul du taux d'air recyclé peut être par exemple effectué à l'aide de données empiriques.

Lorsque la pile à combustible 10 est en phase de ralenti, le taux d'air recyclé augmente alors si la consigne de puissance diminue. L'augmentation de la concentration de dioxygène dans l'air envoyé vers la cathode 101 permet ainsi d'abaisser la puissance minimale atteignable par la pile à combustible 10 tout en restant au-dessous de la limite maximale de tension autorisée.

L'unité de contrôle 500 enregistre ensuite en mémoire la valeur de consigne obtenue précédemment à l'étape 601 afin de pouvoir la comparer à une nouvelle valeur de consigne, puis retourne à l'étape 601.

A l'étape 606, l'unité de contrôle 500 détermine si la consigne de puissance obtenue augmente par rapport à une valeur de consigne précédente obtenue. Si c'est le cas, l'unité de contrôle 500 effectue une étape 607. Sinon, l'unité de contrôle 500 enregistre en mémoire la valeur de consigne obtenue précédemment à l'étape 601 afin de pouvoir la comparer à une nouvelle valeur de consigne, puis retourne à l'étape 601.

A l'étape 607, l'unité de contrôle 500 diminue le taux d'air recyclé dans la canalisation d'injection 21. Pour cela, l'unité de contrôle 500 envoie une instruction au premier contrôleur de flux 230, comportant une valeur de débit d'air recyclé, et une instruction au deuxième contrôleur de flux 212, comportant une valeur de débit d'air ambiant, de sorte que le débit d'air recyclé injecté dans la canalisation d'injection 21 diminue par rapport au débit d'air ambiant circulant dans la canalisation d'injection 21. Comme précédemment, le taux d'air recyclé peut être calculé en fonction de la valeur de la consigne de puissance ou de l'augmentation de la consigne de puissance, et en tenant compte de paramètres caractéristiques de la pile à combustible 10 et du circuit 2 d'alimentation en air, par exemple à l'aide de données empiriques.

Lorsque la pile à combustible 10 est en phase de ralenti, le taux d'air recyclé diminue si la consigne de puissance augmente, permettant ainsi d'adapter la concentration en dioxygène dans l'air envoyé vers la cathode 101 afin d'obtenir la puissance requise de la pile à combustible 10 sans dépasser la limite maximale de tension autorisée et en optimisant la consommation de dihydrogène.

L'unité de contrôle 500 enregistre en mémoire la valeur de consigne obtenue précédemment à l'étape 601 afin de pouvoir la comparer à une nouvelle valeur de consigne, puis retourne à l'étape 601.

Selon un mode de réalisation alternatif, le procédé de gestion de l'humidification de l'alimentation en air de la pile à combustible 10 permet d'obtenir une consigne de courant plutôt qu'une consigne de puissance à l'étape 601, ladite consigne de courant étant obtenue en provenance d'un dispositif émetteur d'une consigne de courant de la pile à combustible 10. Le procédé de gestion de l'humidification de l'alimentation en air implémente les étapes 602 à 607 en utilisant ladite consigne de courant obtenue et en faisant appel, à l'étape 602, à un seuil prédéfini de courant au lieu du seuil prédéfini de puissance.

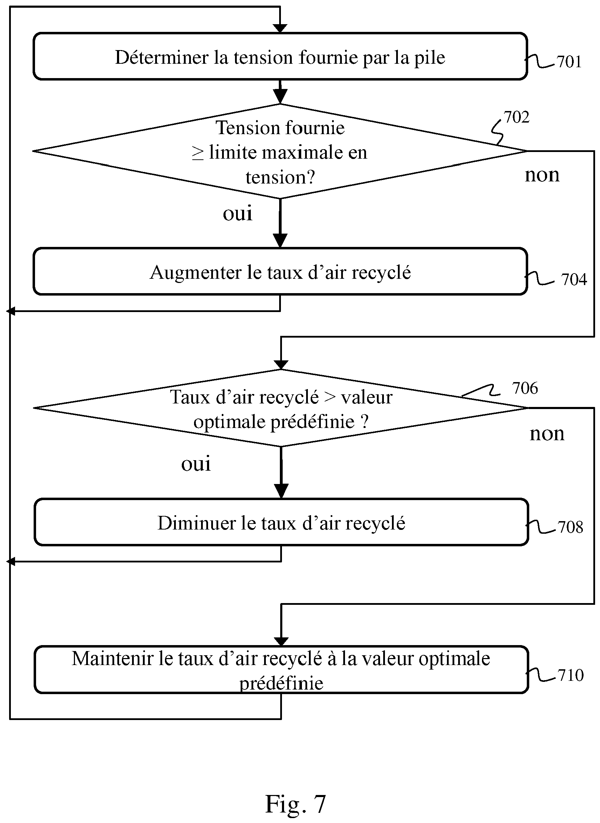

La **Fig. 7** illustre schématiquement un procédé de gestion de l'humidification d'une alimentation en air d'une pile à combustible 10, dans un autre mode de réalisation particulier.

Dans une première étape 701, l'unité de contrôle 500 détermine la tension fournie par la pile à combustible 10, autrement dit la tension délivrée aux bornes de la pile à combustible 10, par le biais d'un détecteur de tension.

Dans une étape suivante 702, l'unité de contrôle 500 compare la tension fournie à la limite maximale de tension autorisée. Si la tension fournie atteint ou dépasse la limite maximale de tension autorisée, alors une étape 704 est effectuée. Sinon, une étape 706 est effectuée.

A l'étape 704, l'unité de contrôle 500 augmente le taux d'air recyclé. L'unité de contrôle 500 envoie une instruction au premier contrôleur de flux 230, comportant une valeur de débit d'air recyclé, et une instruction au deuxième contrôleur de flux 212, comportant une valeur de débit d'air ambiant, de sorte que le débit d'air recyclé injecté dans la canalisation d'injection 21 augmente par rapport au débit d'air ambiant circulant dans la canalisation d'injection 21. L'unité de contrôle 500 retourne ensuite à l'étape 701.

A l'étape 706, l'unité de contrôle 500 détermine si le taux d'air recyclé est supérieur à une valeur prédéfinie. Si c'est le cas, une étape 708 est effectuée. Sinon, une étape 710 est effectuée.

A l'étape 708, l'unité de contrôle 500 diminue le taux d'air recyclé. L'unité de contrôle 500 envoie une instruction au premier contrôleur de flux 230, comportant une valeur de débit d'air recyclé, et une instruction au deuxième contrôleur de flux 212, comportant une valeur de débit d'air ambiant, de sorte que le débit d'air recyclé injecté dans la canalisation d'injection 21 diminue par rapport au débit d'air ambiant circulant dans la canalisation d'injection 21. En outre, le taux d'air recyclé est diminué jusqu'à atteindre une valeur prédéfinie, ladite valeur prédéfinie correspondant au taux d'air recyclé permettant d'obtenir le meilleur rendement possible de la pile à combustible 10 dans une gamme de fonctionnement standard, autrement dit pour un fonctionnement à une puissance nominale. L'unité de contrôle 500 retourne ensuite à l'étape 701.

A l'étape 710, l'unité de contrôle 500 maintient le taux d'air recyclé à la valeur prédéfinie.

Ainsi, lorsque la tension fournie par la pile à combustible 10 atteint ou franchit la limite maximale de tension autorisée, la diminution du taux d'air recyclé permet de faire baisser la tension fournie et d'éviter ainsi une accélération de la dégradation de la pile à combustible 10.

Il est en outre possible d'adapter activement le taux d'air recyclé pour obtenir le meilleur rendement possible dans différentes gammes de puissance de la pile à combustible 10.

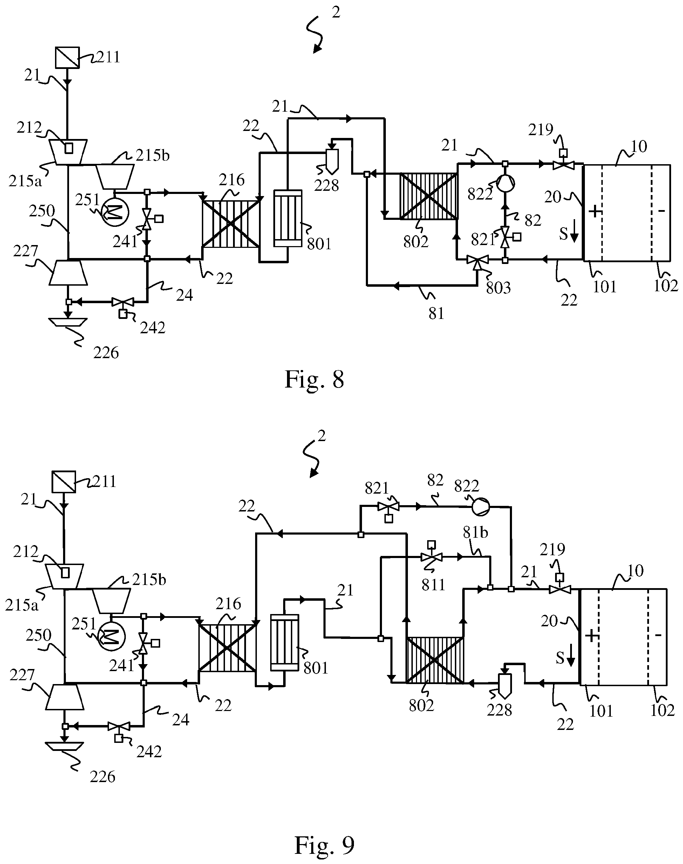

La **Fig. 8** illustre schématiquement le circuit 2 d'alimentation en air selon un quatrième mode de réalisation.

Le circuit 2 d'alimentation en air selon le quatrième mode de réalisation comporte la canalisation d'injection 21, le filtre 211, le compresseur à deux étages 215a, 215b, l'échangeur thermique 216, la vanne 219, la canalisation intermédiaire 20, la canalisation d'évacuation 22, le collecteur d'eau 228, la turbine 227, la tuyère d'échappement 226 ainsi que la canalisation de dérivation 24 comportant les vannes 241 et 242, tels que décrits dans le troisième mode de réalisation.

Le circuit 2 d'alimentation en air selon le quatrième mode de réalisation comporte en outre un échangeur de chaleur supplémentaire 801, un humidificateur 802, une canalisation de dérivation 81, une vanne trois voies 803 et une canalisation de recirculation 82 comportant une vanne 821 et une pompe 822. Le circuit 2 d'alimentation en air ne comporte pas, selon le quatrième mode de réalisation, la canalisation de recirculation 23.

Dans la suite de la description, l'échangeur de chaleur supplémentaire 801 est appelé deuxième échangeur de chaleur et l'échangeur de chaleur 216 précédemment décrit en lien avec le troisième mode de réalisation est appelé premier échangeur de chaleur 216. La canalisation 81 est appelée deuxième canalisation de dérivation 81 et la canalisation de dérivation 24 précédemment décrite en lien avec le troisième mode de réalisation est appelée première canalisation de dérivation 24.

La canalisation de recirculation 82 est reliée en une première extrémité à la canalisation d'évacuation 22 et en une deuxième extrémité à la canalisation d'injection 21. Selon le quatrième mode de réalisation, la canalisation de recirculation 82 relie la canalisation d'évacuation 22, dans une zone située entre la sortie de la canalisation intermédiaire 20 et la vanne trois voies 803, à la canalisation d'injection 21, dans une zone située entre l'humidificateur 802 et la vanne 219. Dans la canalisation de recirculation 82, l'air circule d'abord par la vanne 821 puis passe par la pompe 822 qui génère un mouvement de circulation vers la canalisation d'injection 21.

La canalisation de recirculation 82 permet de récupérer, dans la canalisation d'évacuation 22, tout ou partie de l'air d'échappement issu de la pile à combustible 10 pour l'injecter dans la canalisation d'injection 21. L'air d'échappement ainsi réinjecté dans la canalisation d'injection 21, est dit air recyclé, et est mélangé à l'air ambiant.

La pompe 822 permet en outre de contrôler le débit d'air recyclé et donc la concentration en dioxygène de l'air envoyé dans la canalisation intermédiaire 20. La pompe assure donc le rôle du premier contrôleur de flux 230.

La vanne 821 permet de laisser passer ou non l'air dans la canalisation de recirculation 82. Dans une phase de fonctionnement standard, la vanne 821 est fermée et l'air ne circule pas dans la canalisation de recirculation 82. L'humidification de l'air envoyé vers la canalisation intermédiaire 20 est assurée et contrôlée par l'humidificateur 802. En revanche, dans une phase de fonctionnement à faible puissance, la vanne 821 est ouverte, et l'air recyclé est mélangé à l'air ambiant, afin de réduire la concentration en dioxygène de l'air envoyé dans la canalisation intermédiaire 20, et obtenir un fonctionnement de la pile à combustible 10 à basse puissance tout en restant sous la limite maximale de tension autorisée. L'air envoyé dans la canalisation intermédiaire 20 est humidifié à la fois par l'humidificateur 802 et par la présence d'air recyclé.

Le deuxième échangeur de chaleur 801 est situé sur la canalisation d'injection 21 après le premier échangeur de chaleur 216 dans le sens S de circulation du l'air. Le deuxième échangeur de chaleur 801 permet de refroidir l'air circulant dans la canalisation d'injection 21 par échange de chaleur vers un fluide de refroidissement circulant dans ledit deuxième échangeur de chaleur 801. Le deuxième échangeur de chaleur 801 permet de réduire le volume du premier échangeur de chaleur 216 tout en assurant que la température d'air entrant dans la canalisation intermédiaire 20 soit adaptée pour le fonctionnement de la pile à combustible 10.

L'humidificateur 802 est traversé par la canalisation d'injection 21 et la canalisation d'évacuation 22 qui se croisent de sorte à permettre un échange de molécules d'eau depuis l'air circulant dans la canalisation d'évacuation 22 vers l'air circulant dans la canalisation d'injection 21. L'échange d'eau est permis par la présence d'une membrane perméable à l'eau telle qu'un matériau poreux. L'humidificateur 802 est situé, sur la canalisation d'injection 21, après le deuxième échangeur de chaleur 801 et avant une jonction avec la canalisation de recirculation 82, dans le sens de circulation S de l'air. L'humidificateur 802 est situé, sur la canalisation d'évacuation 22, après la vanne trois voies 803 et avant le collecteur d'eau 228, dans le sens de circulation S de l'air. L'humidificateur 802 permet d'augmenter et de contrôler la concentration en eau de l'air envoyé dans la canalisation intermédiaire 20.

La deuxième canalisation de dérivation 81 relie la vanne trois voies 803 de la canalisation d'évacuation 22, dans une zone située en amont de l'humidificateur 802, à la canalisation d'évacuation 22, dans une zone située entre l'humidificateur 802 et le collecteur d'eau 228. La deuxième canalisation de dérivation 81 permet ainsi d'empêcher l'air circulant dans la canalisation d'évacuation 22 de circuler par l'humidificateur 802.

La vanne trois voies 803 est située sur la canalisation d'évacuation 22 après la sortie de la canalisation intermédiaire 20 dans le sens S de circulation de l'air. La vanne trois voies 803 comporte quatre positions. Dans une première position, la vanne trois voies 803 est fermée, permettant ainsi d'isoler la pile à combustible 10 lorsque la pile à combustible 10 est arrêtée. La vanne trois voies 803 assure alors le rôle de la vanne 229 décrite dans le troisième mode de réalisation.

Dans une deuxième position, la vanne trois voies 803 permet de faire circuler l'air issu de la canalisation intermédiaire 20 vers la deuxième canalisation de dérivation 81 et l'empêcher de passer par l'humidificateur 802. Cela permet de vider l'humidificateur 802 et notamment d'enlever l'eau sous forme liquide afin d'éviter la détérioration de l'humidificateur par la formation de glace lorsque les conditions de fonctionnement sont à des températures négatives. C'est le cas par exemple lorsque la pile à combustible 10 est à l'arrêt ou lorsqu'elle redémarre.

Dans une troisième position, la vanne trois voies 803 permet de faire circuler tout l'air issu de la canalisation intermédiaire 20 vers l'humidificateur 802 et l'empêcher de passer par la deuxième canalisation de dérivation 81.

Dans une quatrième position, la vanne trois voies 803 permet de faire circuler l'air issu de la canalisation intermédiaire 20 à la fois vers l'humidificateur 802 et vers la deuxième canalisation de dérivation 81. La vanne trois voies 803 peut contrôler le débit d'air circulant vers l'humidificateur 802 d'une part et circulant vers la deuxième canalisation de dérivation 81 d'autre part. Cela permet alors de contrôler la concentration en eau de l'air circulant à travers l'humidificateur 802 et faciliter le contrôle de l'humidification de l'air envoyé vers la canalisation intermédiaire 20.

La **Fig. 9** illustre schématiquement le circuit 2 d'alimentation en air selon un cinquième mode de réalisation.

Le circuit 2 d'alimentation en air selon le cinquième mode de réalisation comporte la canalisation d'injection 21, le filtre 211, le compresseur à deux étages 215a, 215b, le premier échangeur de chaleur 216, le deuxième échangeur de chaleur 801, l'humidificateur 802, la vanne 219, la canalisation intermédiaire 20, la canalisation d'évacuation 22, le collecteur d'eau 228, la canalisation de recirculation 82 comportant la vanne 821 et la pompe 822, la turbine 227, la tuyère d'échappement 226 ainsi que la canalisation de dérivation 24 comportant les vannes 241 et 242.

Le circuit 2 d'alimentation en air selon le cinquième mode de réalisation comporte en outre une troisième canalisation de dérivation 81b reliant la canalisation d'injection 21, dans une zone située entre le deuxième échangeur de chaleur 801 et l'humidificateur 802, à la canalisation d'injection 21, dans une zone située entre l'humidificateur 802 et la vanne 219. La troisième canalisation de dérivation 81b permet d'empêcher l'air circulant dans la canalisation d'injection 21 de circuler par l'humidificateur 802. Cela permet de vider l'humidificateur 802 et notamment d'enlever l'eau sous forme liquide afin d'éviter la détérioration de l'humidificateur 802 par la formation de glace lorsque les conditions de fonctionnement sont à des températures négatives.

Selon le cinquième mode de réalisation, le collecteur d'eau 228 est situé en amont de l'humidificateur 802, autrement dit entre la sortie de la canalisation intermédiaire 20 et l'humidificateur 802. En outre, la canalisation de recirculation 82 relie la canalisation d'évacuation 22, dans une zone située entre l'humidificateur 802 et le premier échangeur de chaleur 216, à la canalisation d'injection 21, dans une zone située en aval de l'humidificateur 802, autrement dit entre l'humidificateur 802 et la vanne 219.

L'humidificateur 802 est utilisé pour permettre un échange de molécules d'eau depuis l'air circulant dans la canalisation d'évacuation 22 vers l'air circulant dans la canalisation d'injection 21 et permet ainsi, d'une part, d'humidifier l'air envoyé dans la canalisation intermédiaire 20, et d'autre part, de déshumidifier l'air circulant dans la canalisation d'évacuation 22.

La première extrémité de la canalisation de recirculation 82 étant située en aval de l'humidificateur 802 sur la canalisation d'évacuation 22, l'air recyclé injecté dans la canalisation d'injection 21 est ainsi appauvri en eau, ce qui permet d'éviter des dégradations dans la pile à combustible 10 résultant de la présence d'eau tout en permettant de réduire la concentration de dioxygène et fonctionner à basse puissance sans atteindre la limite maximale de tension autorisée. Cet avantage est particulièrement intéressant lorsque la pile à combustible 10 fonctionne à basse température car la concentration d'eau générée par la pile à combustible 10 est plus importante. L'emplacement du collecteur d'eau 228 en amont de l'humidificateur 802 sur la canalisation d'évacuation 22 amplifie l'appauvrissement en eau de l'air recyclé.

## Revendications

1. Procédé de gestion d'une humidification d'une alimentation en air d'une pile à combustible (10) pour aéronef (1), un circuit (2) d'alimentation en air de la pile à combustible (10) comportant une canalisation d'injection (21), une canalisation intermédiaire (21) passant par la cathode (101), et une canalisation d'évacuation (22), l'air circulant dans un sens (S) prédéfini dans le circuit (2) d'alimentation en air en passant successivement dans la canalisation d'injection (21), la canalisation intermédiaire (20) et la canalisation d'évacuation (22),
le procédé comportant des étapes de :
- récupérer de l'air, dit air recyclé, issu de la pile à combustible, dans la canalisation d'évacuation (22),
- injecter, dans la canalisation d'injection, l'air recyclé récupéré de sorte à mélanger l'air recyclé à de l'air ambiant,
le procédé étant **caractérisé en ce qu'**il comporte en outre :
- augmenter (605, 704) le taux d'air recyclé par rapport à l'air ambiant dans la canalisation d'injection :
- lorsqu'une consigne de puissance ou de courant de la pile à combustible diminue et si en outre ladite consigne de puissance ou de courant est inférieure (602) à un seuil prédéfini, ou
- lorsqu'une tension fournie par la pile à combustible atteint ou s'élève au-dessus d'une limite maximale de tension autorisée,
et **en ce que** le procédé comporte en outre :
- diminuer (607, 708) le taux d'air recyclé par rapport à l'air ambiant dans la canalisation d'injection :
- lorsque la consigne de puissance ou de courant augmente et si en outre ladite consigne de puissance ou de courant, reste inférieure (602) au seuil prédéfini, ou
- lorsque la tension fournie par la pile à combustible descend en-dessous de la limite maximale de tension autorisée.

2. Procédé selon la revendication 1, dans lequel injecter l'air recyclé dans la canalisation d'injection (21) est effectué en entrée d'un compresseur (215) situé sur la canalisation d'injection (21).

3. Procédé selon la revendication 1, dans lequel injecter l'air recyclé dans la canalisation d'injection (21) est effectué entre les deux étages d'un compresseur à deux étages (215a, 215b), ledit compresseur étant situé sur la canalisation d'injection (21).

4. Procédé selon la revendication 1, dans lequel la canalisation d'injection (21) comporte un humidificateur (802) configuré pour permettre un échange d'eau entre l'air circulant dans la canalisation d'évacuation (22) et l'air circulant dans la canalisation d'injection (21), et dans lequel l'étape d'injecter, dans la canalisation d'injection (21), l'air recyclé récupéré de sorte à mélanger l'air recyclé à de l'air ambiant, est effectuée uniquement lorsque la consigne de puissance ou de courant est inférieure (602) à un seuil prédéfini, ou lorsqu'une tension fournie par la pile à combustible atteint ou s'élève au-dessus de la limite maximale de tension autorisée.

5. Procédé selon la revendication 1, dans lequel la canalisation d'injection (21) comporte un humidificateur (802) configuré pour permettre un échange d'eau entre l'air circulant dans la canalisation d'injection (21) et l'air circulant dans la canalisation d'évacuation (22), dans lequel l'étape de récupérer de l'air recyclé dans la canalisation d'évacuation (22) est effectuée en aval de l'humidificateur (802) sur la canalisation d'évacuation (22), et dans lequel l'étape d'injecter, dans la canalisation d'injection (21), l'air recyclé récupéré de sorte à mélanger l'air recyclé à de l'air ambiant, est effectuée uniquement lorsque la consigne de puissance ou de courant est inférieure (602) à un seuil prédéfini, ou lorsqu'une tension fournie par la pile à combustible atteint ou s'élève au-dessus de la limite maximale de tension autorisée.

6. Circuit (2) d'alimentation en air d'une pile à combustible (10) pour aéronef (1), le circuit (2) d'alimentation étant destiné à humidifier l'air alimentant la pile à combustible (10), le circuit (2) d'alimentation en air comportant :
- une canalisation d'injection (21),
- une canalisation intermédiaire (20) passant par une cathode (101) de la pile à combustible (10), et
- une canalisation d'évacuation (22),
l'air circulant dans un sens prédéfini (S) dans le circuit d'alimentation en passant successivement dans la canalisation d'injection (21), la canalisation intermédiaire (20) et la canalisation d'évacuation (22),
le circuit (2) d'alimentation en air comportant en outre une canalisation, dite canalisation de recirculation (23, 82) comportant :
- une première extrémité reliée à la canalisation d'évacuation (22) de sorte à récupérer de l'air recyclé, issu de la pile à combustible (10), et
- une deuxième extrémité reliée à la canalisation d'injection (21), de sorte à injecter, dans la canalisation d'injection (21), l'air recyclé récupéré et mélanger l'air recyclé à de l'air ambiant,
le circuit (2) d'alimentation en air étant **caractérisé en ce qu'**il est configuré pour augmenter (605, 704) le taux d'air recyclé par rapport à l'air ambiant dans la canalisation d'injection :
- lorsqu'une consigne de puissance ou de courant de la pile à combustible diminue et si ladite consigne de puissance ou de courant est inférieure (602) à un seuil prédéfini, ou
- lorsqu'une tension fournie par la pile à combustible atteint ou s'élève au-dessus d'une limite maximale de tension autorisée,
et **en ce que** le circuit (2) d'alimentation est configuré pour diminuer (607, 708) le taux d'air recyclé par rapport à l'air ambiant dans la canalisation d'injection :
- lorsque la consigne de puissance ou de courant augmente et si ladite consigne de puissance ou de courant reste inférieure (602) au seuil prédéfini, ou
- lorsque la tension fournie par la pile à combustible descend en-dessous de la limite maximale de tension autorisée.

7. Circuit (2) d'alimentation en air selon la revendication précédente comportant en outre :
- un premier contrôleur de flux (230, 822) situé sur la canalisation de recirculation (23, 82) pour contrôler le débit de l'air recyclé,
- un deuxième contrôleur de flux (212), situé sur la canalisation d'injection (21) avant la deuxième extrémité de la canalisation de recirculation (23, 82) par rapport au sens prédéfini (S) de circulation de l'air, pour contrôler le débit de l'air ambiant.

8. Circuit (2) d'alimentation en air selon l'une des revendications 6 et 7, dans lequel la canalisation d'injection (21) comporte un compresseur (215) d'air ambiant, la deuxième extrémité de la canalisation de recirculation (23) étant reliée à la canalisation d'injection (21) avant l'entrée du compresseur (215) d'air ambiant.

9. Circuit (2) d'alimentation en air selon l'une des revendications 6 et 7, dans lequel la canalisation d'injection (21) comporte un compresseur d'air ambiant à deux étages (215a, 215b), la deuxième extrémité de la canalisation de recirculation (23) étant reliée à la canalisation d'injection entre les deux étages (215a, 215b) du compresseur d'air ambiant à deux étages.

10. Circuit (2) d'alimentation en air selon l'une des revendications 6 et 7, dans lequel la canalisation d'injection (21) comporte un humidificateur (802) configuré pour permettre un échange d'eau entre l'air circulant dans la canalisation d'évacuation (22) et l'air circulant dans la canalisation d'injection (21), et dans lequel la canalisation de recirculation (82) comporte une vanne (821), la vanne étant ouverte uniquement lorsque la consigne de puissance ou de courant est inférieure (602) à un seuil prédéfini, ou lorsque la tension fournie par la pile à combustible atteint ou s'élève au-dessus de la limite maximale de tension autorisée.

11. Circuit (2) d'alimentation en air selon l'une des revendications 6 et 7, dans lequel la canalisation d'injection (21) comporte un humidificateur (802) configuré pour permettre un échange d'eau entre l'air circulant dans la canalisation d'injection (21) et l'air circulant dans la canalisation d'évacuation (22) et dans lequel la première extrémité de la canalisation de recirculation (82) est située en aval de l'humidificateur (802), la canalisation de recirculation (82) comportant une vanne (821), la vanne étant ouverte uniquement lorsque la consigne de puissance ou de courant est inférieure (602) à un seuil prédéfini, ou lorsque la tension fournie par la pile à combustible atteint ou s'élève au-dessus de la limite maximale de tension autorisée.

12. Aéronef (1) comportant un circuit (2) d'alimentation en air selon l'une quelconque des revendications 6 à 11.

13. Produit programme d'ordinateur pouvant être stocké sur un support et/ou téléchargé d'un réseau de communication, afin d'être lu par un processeur, et **caractérisé en ce qu'**il comprend des instructions pour implémenter le procédé selon l'une des revendications 1 à 5, lorsque ledit programme d'ordinateur est exécuté par le processeur.

14. Support de stockage d'informations stockant un programme d'ordinateur comprenant des instructions pour implémenter le procédé selon l'une des revendications 1 à 5 lorsque ledit programme d'ordinateur est lu depuis ledit support de stockage et exécuté par le processeur.
